(19) Europäisches Patentamt
European Patent Office
Office européen des brevets

(11) Publication number: **0 248 666**
**A1**

(12) **EUROPEAN PATENT APPLICATION**

(21) Application number: 87304953.0

(51) Int. Cl.$^3$: C 08 G 73/18

(22) Date of filing: 04.06.87

(30) Priority: 05.06.86 US 871196

(43) Date of publication of application:
09.12.87 Bulletin 87/50

(84) Designated Contracting States:
DE FR GB NL

(71) Applicant: CELANESE CORPORATION
1211 Avenue of the Americas
New York New York 10036(US)

(72) Inventor: Ward, Bennett C.
7932 Park Vista Circle
Pineville North Carolina(US)

(72) Inventor: Jamison, Charles E.
1205 Hollow Tree Court
Charlotte North Carolina(US)

(72) Inventor: Rierson, Donald R., Jr.
8613 Dogwood Drive
Charlotte North Carolina(US)

(74) Representative: De Minvielle-Devaux, Ian Benedict Peter et al,
CARPMAELS & RANSFORD 43, Bloomsbury Square
London WC1A 2RA(GB)

(54) **Improvements in two-stage polybenzimidazole process.**

(57) A two-stage process for the production of polybenzimidazoles is provided wherein a mixture of an aromatic tetraamine, e.g., 3,3',4,4'-tetraaminobiphenyl, a free dicarboxylic acid, e.g., isophthalic acid, and a monohydric phenolic compound, e.g. phenol, is heated with agitation in a first stage to a temperature above the melting point of the tetraamine until the viscosity of the mixture rises as indicated by rapid rise in agitator torque. The agitation is then discontinued and the reaction mixture is allowed to foam while heating is continued. The foam is then allowed to cool to a friable mass and is crushed to a ground prepolymer which is heated with agitation in a second stage until the desired polymer is obtained. Polymer may be obtained by the process which has a higher inherent viscosity than when no monohydric phenolic compound is employed.

EP 0 248 666 A1

Croydon Printing Company Ltd.

# IMPROVEMENTS IN TWO STAGE POLYBENZIMIDAZOLE PROCESS

The present invention provides an improved two-stage polymerization process for the production of high molecular weight polybenzimidazoles utilizing a free aromatic dicarboxylic acid as monomer.

## BACKGROUND OF THE INVENTION

High molecular weight polybenzimidazoles are polymers of high thermal stability and excellent resistance to oxidative or hydrolytic degradation, which can be formed into shaped articles such as fibers and films having very desirable physical properties. As taught by the published literature, these polymers may be prepared, for example, by melt polymerizing an aromatic tetraamine and a diphenylester or an anhydride of an aromatic or heterocyclic dicarboxylic acid in one or two-stage process; see for example H. Vogel and C.S. Marvel, Journal of Polymer Science,Vol.1, pages 511-539 (1961); and U.S. Patents Nos. Re. 26,065; 3,174,947; 3,509,108; 3,551,389; 3,433,772; and 3,655,632. In particular, U.S. Patent No. 3,551,389 discloses a two-stage process for the production of aromatic polybenzimidazoles, in which the monomers are heated at a temperature above 170° C, in a first stage melt polymerization zone until a foamed prepolymer is formed. The foamed prepolymer is cooled, pulverized, and introduced into a second stage polymerization zone with phenol where it is heated again to yield a polybenzimidazole polymer product of increased molecular weight. However, this patent has no suggestion of the use of a free aromatic dicarboxylic acid for the polymerization or the use of free phenolic compound at the start of polymerization.

It has also been known to prepare polybenzimidazoles from the free dicarboxylic acid rather than the phenyl esters or anhydrides in a melt polymerization process. However, many of the early investigators of these polymers believed that inferior or unsatisfactory polymers resulted from the use of the free acid as the monomer. Thus Vogel and Marvel state in their cited article that in attempting to prepare polybenzimidazoles from aromatic dioic acids and aromatic tetraamines, "The use of the free acids and the corresponding dimethyl esters gave inferior results". (page 513) Moreover, these same two investigators do not mention the free acids as monomers in their U.S. Patent No. 3,174, 947 in which polybenzimidazoles are disclosed and claimed, nor are the gree acids mentioned as possible monomers in any of the other cited patents.

In addition to the melt polymerization process described in the foregoing references, a process of preparing polybenzimidazoles has been proposed in which good results are reported to be obtained using a free dicarboxylic acid as monomer. This process involves the solution polymerization of an inorganic acid salt of an aromatic tetraamine and a dicarboxylic acid or a derivative thereof with heat in the presence of polyphosphoric acid; (see U.S. Patent No. 3,31,783 and Iwakura et al, Journal of Polymer Science: Part A, Vol. 2, pages 2605-2615 (1964). According to this process, the polymer product after completion of the reaction can be separated by pouring the reaction mixture in the form of a polyphosphoric acid solution into a large quantity of water. However, this separation procedure is complicated and, moreover, it is difficult to recover and reuse the polyphosphoric acid. Thus, this process is not generally considered satisfactory for the commercial production of polybenzimidazoles.

Copending application Serial No. 780,709 filed September 26, 1985, discloses a two-stage process for the production of aromatic polyamide/benzimidazole copolymers.

## SUMMARY OF THE INVENTION

In accordance with one aspect of this invention, polybenzimidazoles are prepared by reacting at least one aromatic tetraamine containing two pairs of amine substituents on an aromatic ring, the amine substituents being ortho to one another, with at least one free dicarboxylic acid in a two-stage polymerization process wherein said polymerization is initiated in the presence of a monohydric phenolic compound. In the first stage of the process, the mixture of aromatic tetraamine, dicarboxylic acid,phenolic compound and,if desired, a polymerization catalyst is heated to condensation polymerization temperatures which are above the melting point of the aromatic tetraamine. Depending on the nature and melting point of the dicarboxylic acid, the resulting polymerizing mass is a liquid which may be a slurry of solid acid particles in melted tetraamine, or a homogeneous mixture of tetraamine and acid or an emulsion comprising melted tetraamine and melted acid. The heating is continued to between 230-350°C with concurrent strong agitation until the viscosity of the mixture rises to a point indicated by a rapid rise in agitator torque. The agitation is then terminated, and heating is continued while allowing the mass to foam to a friable mass. The resulting prepolymer is then cooled and ground to a powder which is heated in the solid state in a second polymerization stage at a higher temperature than the first stage until the desired degree of polymerization is achieved.

It has been found that the presence of the monohydric phenolic compound during the polymerization reaction often results in the production of polymers of higher molecular weight as indicated by higher inherent viscosity, and better filterability.

Despite the disadvantages of processes utilizing a free dicarboxylic acid as monomer in the preparation of polybenzimidazoles, it has the advantage of being substantially less expensive than other dicaraboxylic compounds which may be used as monomers such as the corresponding phenyl esters. In view of this there have been attempts to develop processes which utilize a free acid as monomer and result in polymers which can be formed into shaped articles of commercial utility. For example, U.S. Patent No. 4,312,976 discloses a single-stage process of preparing polybenzimidazoles from a free dicarboxylic acid as monomer, wherein the catalyst is an organic sulfonic acid, a halogenated acetic acid or a non-oxidizing inorganic acid. However, aside from being limited to a specific class of catalysts, this process results in a polymer mass of high viscosity requiring substantial agitation energy especially in the latter part of the polymerization process. Furthermore, the final polymer is in the form of a solidified mass which is difficult to handle and to dissolve in an appropriate solvent for forming into shaped articles such as fibers.

Copending application Serial No. 645,952, filed August 31, 1984, discloses and claims a two-stage process for the production of polybenzimidazoles using a free dicarboxylic acid as the dicarboxylic monomer component, which eliminates some of the disadvantages of a one stage process utilizing the free acid described previously.

Copending application Serial No. 704,227, filed February 22, 1985, discloses a two-stage process for the production of polybenzimidazoles from an aromatic tetraamine and a dicarboxylic component wherein not all the carboxylic groups of the dicarboxylic component are either free carboxyl or phenyl ester groups.

DETAILED DESCRIPTION OF THE INVENTION

The polybenzimidazoles which can be produced by the process of this invention are those having repeating units of the following formula :

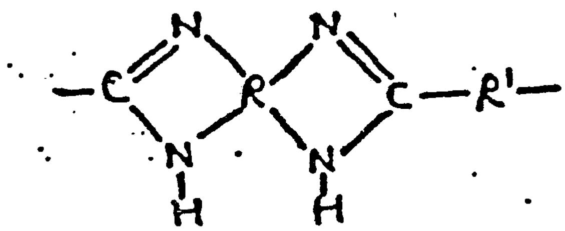

wherein R is a tetravalent aromatic nucleus with the nitrogen atoms forming the benzimidazole rings being paired upon adjacent carbon atoms, i.e., ortho carbon atoms, of the aromatic nucleus, and R' is a member of the class consisting of an aromatic ring; an alkylene group (preferably having 4 to 8 carbon atoms); and a heterocyclic ring such as pyridine, pyrazine, furan, quinoline, thiophene, and pyran. Depending on whether the dicarboxylic acid moieties in the dicarboxylic monomer component are the same or different, R' may be the same or randomly different among the repeating units along the polymer chain. Moreover, depending on whether one or more than one tetraamine monomer is utilized in the polymerization, R may also be the same or randomly different along the polymer chain.

The following generalized equation illustrates the condensation reaction which occurs in forming the polybenzimidazoles having the recurring units of the foregoing formula:

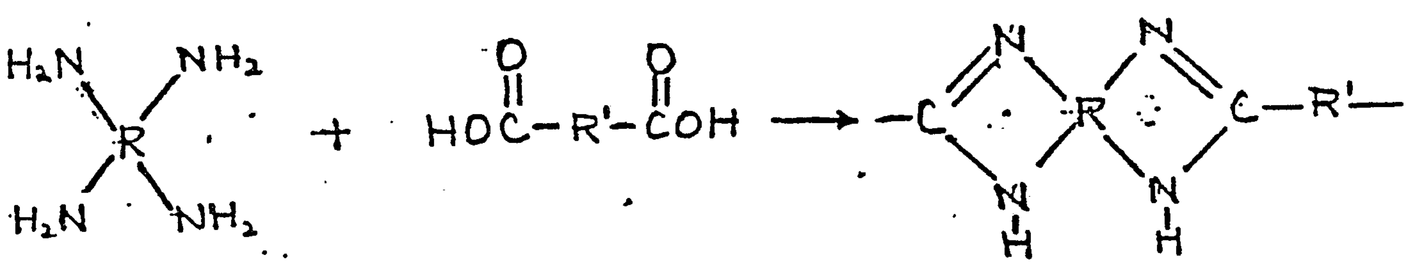

$+4H_2O$

Such polybenzimidazoles are produced by the reaction of a mixture of (1) at least one aromatic tetraamine containing two groups of amine substituents, the amine substituents in each group being in an ortho position relative to each other, and (2) at least one dicarboxylic acid.

Aromatic tetraamines which may be used are for example those with the following formulas :

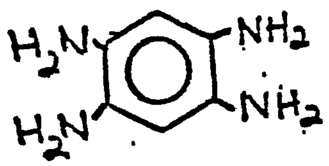

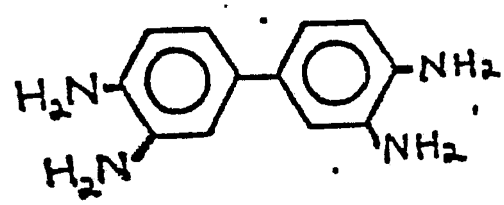

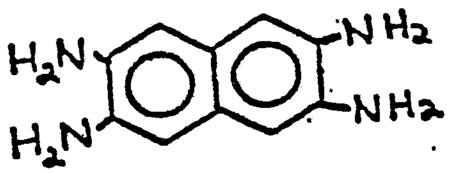

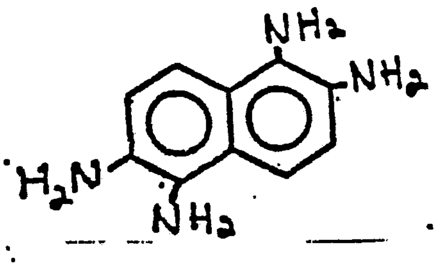

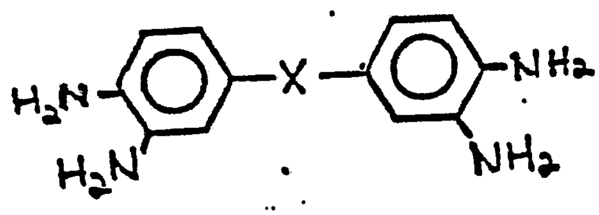

where x represents -O-, -S-,$-SO_2$, -C-, or a lower alkylene group, such as $-CH_2-$, $-(CH_2)_2-$, or $-C(CH_3)_2-$. Among such aromatic tetraamines may be mentioned, for example, 1,2,4,5-tetraaminobenzene; 1,2,5,6-tetraaminonaphthalene; 2,3,6,7-tetraaminonaphthalene; 3,3',4,4'- tetraaminodiphenyl methane;
3,3',4,4'-tetraaminodiphenyl ethane;
3,3',4,4'-tetraaminodiphenyl-2,2-propane;
3,3',4,4'-tetraaminodiphenyl thioether; and
3,3',4,4'-tetraaminodiphenyl sulfone. The preferred aromatic tetraamine is 3,3',4,4'-tetraaminobiphenyl.

The dicarboxylic acids which are suitable for use in the production of polybenzimidazoles by the process of the present invention include aromatic dicarboxylic acids; aliphatic dicarboxylic acids (preferably, those having 4 to 8 carbon atoms); and heterocyclic dicarboxylic acids

wherein the carboxyl groups are substituents upon carbon atoms in a ring compound such as pyridine, pyrazine, furan, quinoline, thiophene, and pyran.

The preferred dicarboxylic acids are aromatic dicarboxylic acids such as those illustrated below:

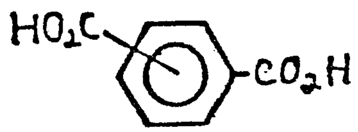

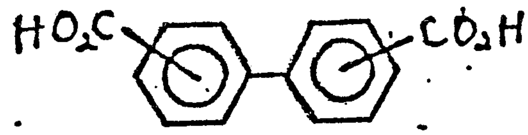

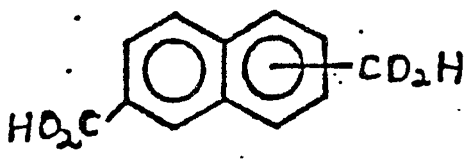

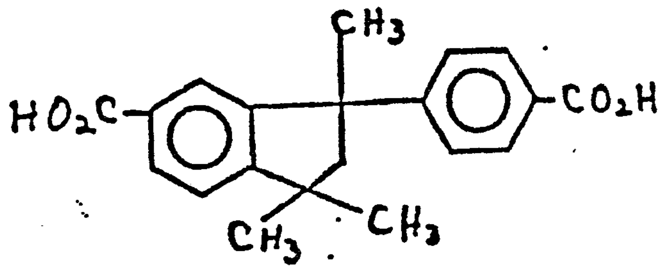

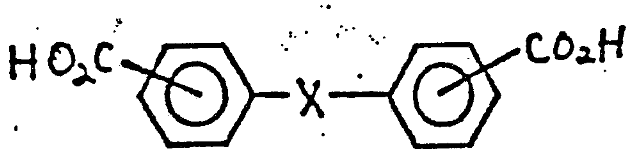

where X is as defined above. For example, the following diacids can suitably be employed: isophthalic acid; terephthalic acid; 4,4'-biphenyldicarboxylic acid; 1,4-naphthalenedicarboxylic acid; diphenic acid (2,2'-biphenyldicarboxylic acid); phenylindandicarboxylic acid; 1,6-napthalenedicarboxylic acid; 2,6-naphthalenedicarboxylic acid; 4,4'-diphenyletherdicarboxylic acid; 4,4'-diphenylmethanedicarboxylic acid; 4,4'diphenylsulfoneddicarboxylic acid; and 4,4'-diphenylthioetherdicarboxylic acid. Isophthalic acid is the dicarboxylic acid which is most preferred for use in the process of the present invention.

It is preferred to employ the dicarboxylic acid in a ratio of about 1 mole per mole of aromatic tetraamine. However, the optimal ratio of reactants in a particular polymerication system can be easily determined by one of

ordinary skill in the art.

The monohydric phenolic compound present during the polymerization reaction may be unsubstituted monohydric phenols such as phenol, 1-naphthol or 2-naphthol or the foregoing phenols with one or more of their ring hydrogen atoms substituted with groups which do not interfere with or adversely affect the reaction, e.g. alkyl containing for example 1 to 4 carbons atoms, halogen such as chloro, bromo or fluoro, or nitro. Specific substituted monohydric phenols which may be used are for example p-cresol, m-cresol and p-chlorophenol. The amount of monohydric phenolic compound used may be varied within wide limits but in most cases will be in the range for example, of about 0.5 to 4.0 equivalents and preferably about 1.0 to 2.0 equivalents, with an equivalent defined as the amount of phenolic compound capable of reacting with one carboxyl group per molecule of dicarboxylic acid, which is equal to an amount in moles which is the same as the moles of dicarboxylic acid present.

In accordance with another aspect of the invention, the polymerizing mass may optionally be subjected to an initial refluxing stage which generally results in a further increase in molecular weight as indicated by inherent viscosity. The refluxing may be carried out, for example until the temperature is raised about 220 to 300°C. The polymerization is then continued to completion of the first stage and the polymer is subjected to the second stage as described.

Examples of polybenzimidazoles which may be prepared according to the process of the present invention include:

poly-2,2'-(m-phenylene)-5,5'-bibenzimidazole;
poly-2,2'-(biphenylene-2",2"')-5,5'-bibenzimidazole;
poly-2,2'-(biphenylene-4",4"')-5,5'-bibenzimidazole;
poly-2,2'-(1",1",3"trimethylindanylene-3",5"-p-phenylene)-5,5'-bibenzimidazole;

2,2'-(m-phenylene)-5,5'-bibenzimidazole/
2,2-(1",1",3"-trimethylindanylene)-
5",3"-(p-phenylene)-5,5'-bibenzimidazole
copolymer;

2,2'-(m-phenylene) -5,5- bibenzimidazole/2,2'-
(biphenylene-2",2"') -5,5'-bibenzimidazole
copolymer;

poly-2,2'-(furylene-2",5")-5,5'-bibenzimidazole;

poly-2,2'-(naphthalene-1",6")-5,5'-bibenzimidazole;

poly-2,2'-(naphthalene-2",6")-5,5'-bibenzimidazole;

poly-2,2'-amylene-5,5'-bibenzimidazole;

poly-2,2'-octamethylene-5,5'-bibenzimidazole;

poly-2,2'-(m-phenylene)-diimdazobenzene;

poly-2,2'-cyclohexenyl-5,5'-bibenzimidazole;

poly-2,2'-(m-phenylene)-5,5'-di(benzimidazole)
ether;

poly-2,2'-(m-phenylene)-5,5'-di(benzimidazole)
sulfide;

poly-2,2'-(m-phenylene)-5,5'-di(benzimidazole)
sulfone;

poly-2,2'-(m-phenylene)-5,5'-di(benzimidazole)
methane;

poly-2,2"-(m-phenylene)-5,5"-di(benzimidazole)
propane-2,2; and

poly-ethylene-1,2,-2,2"-(m-phenylene)-5,5"-
dibenzimidazole) ethylene-1,2

where the double bonds of the ethylene groups are intact in the final polymer.

The preferred polybenzimidazole prepared by the process of the present invention is poly-2,2'-(m-phenylene)-5,5'-bibenzimidazole, the recurring unit of which is:

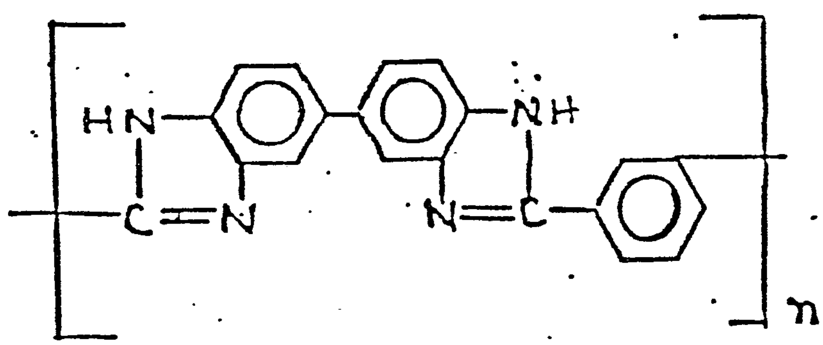

where n is an integer in excess of 75. This polymer can be prepared in accordance with the process of the present invention by the reaction of 3,3',4,4'-tetraaminobiphenyl with isophthalic acid.

The polymerization process of this invention can be carried out without a catalyst but it is preferable to have a catalyst present in order to increase inherent viscosity. Catalysts which may be used are, for example, phosphorus compounds such as triaryl phosphites and diaryl phosphites in which the aryl groups may be, for example, phenyl, tolyl and substituted phenyl wherein the substituents may be, for example, alkyl and alkoxy containing up to 4 carbon atoms, trialkyl phosphites wherein the alkyl groups contain up to 4 carbon atoms, triarly phosphines wherein the aryl group may be phenyl, tolyl, naphthyl, fluorophenyl and methoxyphenyl, trialkyl phosphines, wherein the alkyl groups are propyl or butyl, halophosphines such as phenyldichlorophosphine, phosphorustrihalides, phosphorusoxy trihalides, magnesium, manganese and alkali metal hypophosphites, e.g. sodium hypophosphites, and triarly phosphates, e.g. triphenyl phosphate; tin compounds such as n-butylstannoic acid, dibutyltin oxide, dibutyltin acetate, stannous chloride, stannic chloride, dibutyltin dilaurate, and stannous oxalate; silanes and siloxanes of the formula:

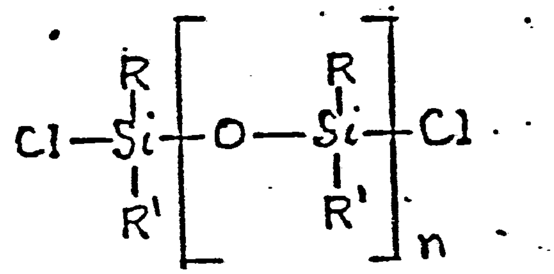

where R and R' may be the same or different and are methyl, phenyl or hydrogen and n is zero or an integer, e.g. up to 5, such as dimethyldichlorosilane, diphenyldichlorosilane, methylphenyldichlorosilane, and 1,3-dichloro-1,1,3,3-tetramethylsiloxane; organic sulfonic acids such as p-toluenesulfonic acid, benzenesulfonic acid, methanesulfonic acid, trifluoromethanesulfonic acid, and mixtures of the above, halogenated acetic acids as trifluoroacetic acid, and trichloroacetic acid, and mixtures of the above and non-oxidizing acids such as

sulfuric acid, phosphoric acid, and hydrochloric acid. The preferred catalyst in triphenyl phosphite.

The process of the invention may be used to produce polybenzimidazoles of one or more aromatic tetraamines and one of more dicarboxylic acids. In general, stoichiometric quantities of the total tetraamine and dicarboxylic component are utilized.

If a catalyst is employed, it is present in an amount, for example, of about 1 to 6 mole %, preferably about 2 to 4 mole % based on the total tetraamine or dicarboxylic acid component.

The first stage of the process of the invention is carried out by heating the aromatic tetraamine, dicarboxylic acid, monohydric phenolic compound and catalyst, if used, with strong agitation to a temperature in the range of 230 - 350°C and preferably 280 - 340°C. Depending on the melting point of the compounds of the dicarboxylic acid and the chemical nature of tetraamine and the dicarboxylic acid, the liquid mass being agitated will be a slurry, a homogenous mixture of an emulsion of two immiscible liquids. When the viscosity of the reacting mass begins to rise as indicated by increased torque on the agitator manifested by increased energy of agitation, the agitation is discontinued and the mass heated further and allowed to foam. The point at which the agitation is discontinued is generally such that the agitator torque and energy of agitation has not risen above, for example, about 1000% of the initial torque or agitation energy after the tetraamine has melted, preferably not above about 300% such initial torque or agitation energy. The mass is then heated further without agitation to a temperature in the range, for example, of about 230 to 350°C, preferably about 280 to 340°C. Such heating is continued for a period of time in the range, for example, of about 0.25 to 3 hours and preferably about 0.5 to 1.5 hours. The foamed mass is then cooled to a temperature below its melting point, e.g., room temperature which causes

it to set up into a solid, friable mass which is easily crushed or ground. In general, the inherent viscosity of the prepolymer after the first stage is complete is in the range, for example, of about 0.05 to 0.3 dl/g, (All inherent viscosities were measured from a solution of 0.4% by weight of polymer in 97% sulfuric acid at 25°C).

The ground prepolymer is then further heated with normal agitation in a second stage to a temperature, for example, of about 300 to 420°C, preferably about 360 to 400°C for a period, for example of about 0.25 to 4 hours, preferably about 0.5 to 2 hours until the desired degree of polymerization is attained.

When poly-2,2' -(m-phenylene)-5,5'- bibenzimidazole is produced from 3,3'4,4'-tetraaminobiphenyl and isophthalic acid using the process of this invention, the first stage may be carried out at a temperature, for example of about 230 to 350°C, preferably about 280 to 340°C for a period of time, for example of about 02.5 to 3 hours preferably 0.5 to 1.5 hours.

The two-stage process of this invention has processing advantages over one-stage processes using a free dicarboxylic acid as monomer proposed previously in which the process is carried out with agitation until the viscosity increase overcomes the torque of the stir motor and locks and/or breaks the agitator. The solid polymer produced in this manner is generally in the form of a lump which is difficult to remove from the reactor and difficult to process into shaped articles such as fibers.

In addition to the processing advantages made possible by the two-stage process of this invention, the process also results in polymers having relatively high inherent viscosities, which is an indication of molecular weight, and relatively high plugging values which is a filterability measurement indicating the amount of insoluble gels and insoluble solid particles present in the polymer.

In both stages of the process of the present invention, a pressure is employed preferably equal to at least atmospheric pressure, e.g. one to two atmospheres, and preferably atomspheric pressure. Such a pressure is commonly obtained by employing an open polymerization system provided with a condenser in order to remove the compounds which are produced as by-products of the reaction.

Both stages of the process are conducted in a substantially oxygen-free atmosphere. For example, an inert gas such as nitrogen or argon can be continuously passed through the reaction zone during the polymerization. The inert gas employed should be substantially oxygen-free, i.e., contain less than about 20 p.p.m. of oxygen, preferably less than about 8 p.p.m., and more preferably, be oxygen-free. The inert gas is introduced into the reaction zone at a rate of flow measured at standard conditions, that is, atmospheric pressure and temperature, within the range of about 1 to 200 percent of the volume of the reaction zone per minute. The inert gas can be passed into the polymerization reaction zone at room temperature or, if desired, preheated to the reaction temperature.

The process of the present invention can be used to produce a high molecular weight polybenzimidazole product as indicated by relatively high inherent viscosity, for example, of at least about 0.4 dl/g when measured at a concentration of 0.4 g. of the polymer in 100 ml. of 97 percent $H_2SO_4$ at 25°C. Preferably, the polymer exhibits an inherent viscosity of at least about 0.5 dl/g, and the inherent viscosity is most preferably at least about 0.6 dl/g.

The following examples further illustrate the invention. The inherent viscosities mentioned in the examples were measured as a 0.4% solution in 97% concentrated sulfuric acid at 25°C while the plugging values were measured by forming a 5% solution of the polymer in a 6% solution in dimethyl acetamide containing 2% lithium

chloride and filtering the solution at 25°C and one atmosphere pressure through a Gelman Type A glass upper filter. The plugging value, which is the number of grams of polymer solution filtered per unit area in infinite time, is expressed in grams of polymer per square centimeter. A higher value indicates a polymer solution containing less gels and insolubles.

Control Examples A to D

These examples describe the preparation of polymers using the process of the invention except that no monohydric phenolic was added to the reactor with the monomeric reactants.

Into a three-necked, one-liter, round-bottomed flask equipped with a nitrogen inlet and outlet, a mechanical stirrer and a condenser was placed 23.6 g (0.140 mol) of isophthalic acid (IPA), 30.0 g (0.140 mol) of 3,3',4,4'-tetraaminobiphenyl (TAB), and 1.8 g (5.8 mmol) of triphenylphosphite (TPP). The flask was degassed and filled with nitrogen. The degassing was repeated at least three times. The flask was then heated with an oil bath at 350°C/hr to 300°C. Stirring was maintained at 300 rpm until condensate evolution began to slow and a rapid torque increase on the stir motor was seen. The oil temperature was 290°C at this point. Agitation was terminated, at which point the polymerizing mass foamed in the reaction flask. The oil bath temperature was increased to 300°C and held at that temperature for one hour. The resulting product was cooled to room temperature and then was ground. The ground prepolymer was placed in a flask; the degassing cycles described above were repeated, and the prepolymer was heated with stirring at 60 rpm at 380°C for 1.5 hours.

Examples 1 to 9

These examples illustrate the effect of adding phenol to the polymerization reaction.

The procedure of Control Examples A to D was followed except that varying amounts of phenol were added to the flask with the monomers and catalyst. The equivalents of phenol utilized together with the inherent viscosities and dimethyl acetamide (DMAc) plugging values of the polymers obtained are shown in Table I:

Table I

| Example | Equiv. Phenol | IV (dl/g) | DMAc PV (g/cm2) |
|---|---|---|---|
| A | 0 | 0.60 | 4.1 |
| B | 0 | 0.61 | 1.2 |
| C | 0 | 0.62 | 3.0 |
| D | 0 | 0.64 | 8.3 |
| 1 | 0.5 | 0.64 | 25 |
| 2 | 0.5 | 0.70 | 9.3 |
| 3 | 1.0 | 0.67 | 25 |
| 4 | 1.0 | 0.67 | 25 |
| 5 | 1.5 | 0.71 | 5.6 |
| 6 | 1.5 | 0.68 | 25 |
| 7 | 2.0 | 0.74 | 11 |
| 8 | 2.0 | 0.73 | 14 |
| 9 | 2.0 | 0.70 | 25 |

The results of Table I show that the employment of phenol in the polymerization reaction generally results in polymers of higher molecular weight as indicated by higher inherent viscosities. Moreover, the utilization of the larger amounts of phenol generally resulted in higher inherent viscosities up to the maximum of two equivalents of phenol employed in the examples.

Examples 10 to 15 and

Comparative Examples E and F

These examples illustrate the effect of adding various monohydric phenolic compounds other than phenol, and a dihydric phenolic compound to the polymerization reaction.

The procedure of the previous examples was followed except that 2 equivalents each of p-cresol, m-cresol and p-chlorophenol (Examples 10 to 15), and of catechol (comparative Examples E and F) were added to the flask with the monomers and catalyst. The identification of the phenolic additive and the inherent viscosities and plugging values of the polymers obtained are shown in Table II:

Table II

| Example | Additive | IV (dl/g) | DMAc PV (g/cm2) |
|---|---|---|---|
| 10 | p-cresol | 0.67 | 25 |
| 11 | p-cresol | 0.81 | 10.2 |
| 12 | m-cresol | 0.72 | 17.3 |
| 13 | m-cresol | 0.76 | 7.1 |
| 14 | p-chlorophenol | 0.90 | 0 |
| 15 | p-chlorophenol | 1.05 | 0 |
| E | catechol | 0.32 | 24 |
| F | catechol | 0.35 | 24 |

The results shown in Table II indicate that addition of each of the various monohydric phenolic resulted in an increase in inherent viscosity of the polymer, and in the case of p-cresol and m-cresol, an improvement in filterability as indicated by plugging value as well when compared with the polymers of control Examples A to D. However, addition of a dihydric alcohol, i.e. catechol resulted in a reduction of inherent viscosity as compared with the control polymers.

Examples 16 and 17

These examples illustrate the advantage of a refluxing stage in raising the inherent viscosity of the polymer. The procedure of Example 7 to 9 utilizing two equivalents of phenol was followed except that instead of being fitted with a takeoff condenser, the flask was fitted with a reflux condenser, allowing condensate to be returned to the flask or directed to a receiver. In this example, refluxing began when the oil bath temperature reached 220°C and condensate was allowed to reflux and return to the reactor until the temperature of the oil bath

reached 265°C.. At this point, the condensate was directed to a receiver and the first stage was completed. The second stage was then carried out as previously described.

The IV of the polymer of Example 16 was 0.76 dl/g and its DMAc PV was 12.1 g/$cm^2$ while the IV of the polymer of Example 17 was 0.89 and its DMAc PV was 0.0 g/$cm^2$. The polymers thus had inherent viscosities higher than those of the polymers of Control Examples A to D, and of Examples 7 to 9 which employed the same amount of phenol but no refluxing stage.

CLAIMS:

1. A two-stage process for the production of polybenzimidazoles comprising heating in a first stage a mixture of at least one aromatic tetraamine containing two pairs of amine substituents on an aromatic ring in ortho position, at least one free dicarboxylic acid, and a monohydric phenolic compound to condensation polymerization temperatures above the melting point of said tetraamine, continuing the heating with agitation until the occurrence of a rapid rise in agitation torque, terminating the agitation while continuing to heat the reaction mixture to a temperature of from 230 to 350°C and while allowing the mass to foam to a substantial degree, cooling to a friable foamed mass, crushing the mass to obtain a ground prepolymer and heating the ground prepolymer in a second stage at a temperature in excess of the highest temperature employed in said first stage with agitation until the desired degree of polymerization is achieved.

2. The process of Claim 1 wherein said aromatic tetraamine is 3,3',4,4'-tetraaminobiphenyl.

3. The process of Claim 2 wherein said dicarboxylic acid is isophthalic acid.

4. The process of Claim 1 wherein said phenolic compound is phenol.

5. The process of Claim 3 wherein said phenolic compound is phenol.

6. The process of Claim 1 wherein said phenolic compound is p-cresol.

7. The process of Claim 1 wherein said phenolic m-cresol.

8. The process of Claim 1 wherein a catalyst for the reaction is employed.

9. The process of Claim 8 wherein said catalyst is triphenylphosphite.

10. The process of Claim 1 wherein said mixture is allowed to reflux at the beginning of the first stage until the temperature of the mixture is at least 10 to 150°C above the temperature at which refluxing begins.

European Patent Office

# EUROPEAN SEARCH REPORT

0248666
Application number
EP 87 30 4953

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 177 182 (CELANESE)<br><br>& US-A-645 952 (31-08-1984) (Cat. D), & US-A-704 227 (22-02-1985) (Cat. D)<br>--- | | C 08 G 73/18 |
| A | MACROMOLECULES, vol. 5, no. 6, November-December 1972, pages 807-812; V.V. KORSHAK et al.: "Two-stage synthesis of poly(N-phenylbenzimidazoles)"<br>--- | | |
| A | CHEMICAL ABSTRACTS, vol. 70, no. 22, 2nd June 1969, page 10, abstract no. 97284b, Columbus, Ohio, US; V.V. KORSHAK et al.: "Two-stage synthesis of polybenzimidazoles bases on 3,3'-diaminobenzidine and derivatives of terephtalic and 4,4'-diphenyldicarboxylic acids", & IZV. AKAD. NAUK. SSSR, SER. KHIM. 1969, (2), 480-1<br>--- | | TECHNICAL FIELDS SEARCHED (Int. Cl.4)<br><br>C 08 G |
| A | CHEMICAL ABSTRACTS, vol. 79, no. 8, 27th August 1973, pages 2-3, abstract no. 42284c, Columbus, Ohio, US; D.S. TUGUSHI et al.: "Two-stage synthesis and study of aromatic poly(N-phenylbenzimidazoles)", & VYSOKOMOL. SOEDIN., SER. A 1973, 15(5), 969-76<br>--- -/- | | |

The present search report has been drawn up for all claims

| Place of search | Date of completion of the search | Examiner |
|---|---|---|
| THE HAGUE | 17-09-1987 | LEROY ALAIN |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

0248666

European Patent Office

# EUROPEAN SEARCH REPORT

Application number: EP 87 30 4953

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 452 972 (E.W. CHOE et al.)<br>--- | | |
| A | US-A-4 463 167 (E.W. CHOE et al.)<br>--- | | |
| D,A | US-A-3 551 389 (A.E. PRINCE et al.)<br>----- | | |

TECHNICAL FIELDS SEARCHED (Int. Cl.4)

The present search report has been drawn up for all claims

| Place of search | Date of completion of the search | Examiner |
|---|---|---|
| THE HAGUE | 17-09-1987 | LEROY ALAIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82